# EUROPEAN PATENT SPECIFICATION

(11) **EP 4 238 330 B1**
(45) Date of publication and mention of the grant of the patent: **20.03.2024**
(21) Application number: 21823657.8
(22) Date of filing: 27.10.2021
(51) Int. Cl.: H04W 4/80, H04W 4/50, G07F 9/00, G06Q 20/18

(54) **MOBILE APPLICATION FOR MOBILE DEVICES TO ALLOW BEVERAGES DELIVERED BY BEVERAGE VENDING MACHINES TO BE SELECTED AND PERSONALISED**
MOBILE ANWENDUNG FÜR MOBILE VORRICHTUNGEN ZUR AUSWAHL UND PERSONALISIERUNG VON GETRÄNKEN AUS GETRÄNKEVERKAUFSAUTOMATEN
APPLICATION MOBILE POUR DISPOSITIFS MOBILES POUR PERMETTRE LA SÉLECTION ET LA PERSONNALISATION DE BOISSONS DÉLIVRÉES PAR DES DISTRIBUTEURS AUTOMATIQUES DE BOISSONS

(30) Priority: 27.10.2020 EP 20204112; 25.10.2021 IT 202100027353
(43) Date of publication of application: 06.09.2023
(73) Proprietor: EVOCA S.p.A., 24030 Valbrembo (BG) (IT)
(72) Inventor: CAPOBIANCO, Alberto, 24030 Valbrembo (BG) (IT)
(74) Representative: Studio Torta S.p.A.
(86) International application number: PCT/IB2021/059938
(87) International publication number: WO 2022/090965

(56) References cited:
- EP-A1- 2 345 352
- WO-A1-2015/039026
- WO-A1-2016/168665
- KR-A- 20160 149 662
- KR-A- 20200 082 799
- US-A1- 2016 092 931

## Description

### Cross-Reference to Related Applications

This patent application claims priority to European patent application no. 20204112.5 filed on 27.10.2020 and Italian patent application no. 102021000027353 filed on 25.10.2021.

### Technical Field of the Invention

The present invention relates generally to product vending machines, in particular beverage vending machines, and more in particular to a mobile application for mobile devices to allow beverages delivered by beverage vending machines to be selected and personalised.

The present invention finds application in product vending machines dispensing products of any kind and in any state of matter, in particular solid or liquid food products, packaged or prepared at the moment on demand.

The present invention finds advantageous application in beverage vending machines dispensing hot or cold, packaged or so-called instant beverages, i.e., prepared on demand from liquid and/or powdered ingredients, to which the following disclosure will explicitly refer without losing generality.

The present invention may, however, find advantageous application in product vending machines dispensing products of a different kind, such as electronic products, gadgets, personal protective equipment, etc.

### State of the Art

As known, in the field of vending machines, design is increasingly focusing on the development and adoption of technologies that increase interactivity between consumers and vending machines. For this reason, the Human-Machine Interfaces (HMI) of vending machines, e.g. dispensing instant beverages, are continuously evolving to allow consumers to interact with vending machines in an increasingly sophisticated way from different perspectives.

KR 2016 0149662 A discloses an IoT Management system to manage IoT coffee vending machines, wherein the IoT management system may be connected to user terminals and coffee vending machines through wired/wireless communication, and provides sanitation statuses of the inside of the coffee vending machines by using cameras installed in the coffee vending machines, so that the coffee vending machines may be more sanitarily maintained.

US 2016/092931 A1 discloses technologies for distributed promotion management, wherein a device identification may be provided by a consumer electronic device that may comprise a dispensing device. An event notification may be received at the consumer electronic device. The event notification may be based upon the provided device identification. A promotional screen may then be displayed. The promotional screen may comprise a limited time offer section displaying a limited time offer. The limited time offer may be based on the received event notification.

WO 2015/039026 A1 discloses a dispensing device for providing a product categorization user interface from which a product may be selected. The dispensing device may display a menu of product categories in the user interface. A selection of one of the product categories may then be received from the menu. The dispensing device may then display a sub-menu corresponding to a selected one of the plurality of products category in the user interface. A selection of a product may then be received from the sub-menu on the dispensing device. An action request may then be received which corresponds to the selected one of the plurality of products. In response to the action request, the dispensing device may then execute an action (such as a dispensing action) associated with the selected one of the plurality of products from the sub-menu.

KR 2020 0082799 A discloses an interfacing device capable of setting for each user, and more particularly, to an intelligent coffee machine control interfacing system for allowing a user terminal such as a smartphone to be connected to the interfacing system capable of controlling a small home appliance to control a coffee machine, set a coffee drink recipe according to user preferences, and further share the set recipe with other users, thereby allowing a user to enjoy various coffees. The intelligent coffee machine control interfacing system comprises: an application; and an intelligent small home appliance interfacing device.

WO 2016/168665 A1 discloses methods and apparatuses that provide for a cost-reduced touch sensitive user interface including a static printed display. The methods and systems may include providing illumination to guide a user through interaction with a touch sensitive user interface. The methods and systems may include configurable printed display. Further aspects are disclosed providing use of a cost-reduced touch user interface in a beverage dispensing apparatus.

EP 2 345 352 A1 discloses a method for providing information to a user from a capsule for the preparation of a beverage in a beverage producing device, comprising providing a capsule with a two-dimensional barcode thereon, capturing at least one image of the barcode via a digital camera and displaying decoded information from said image on a display.

### Object and Summary of the Invention

The Applicant has observed that, in order to avoid the circulation of germs, viruses, bacteria or other pathogenic micro-organisms which can survive, even for a limited time, on surfaces and in the environment, and which can therefore lead to the spread of contagious infectious diseases, it is important to reduce contact or by-air contamination as much as possible.

In vending machines, this situation occurs in particular when several consumers gather around the beverage vending machine for the so-called coffee break, due to both the inevitable excessive interpersonal proximity (congregation) and the need for hand contact with the user interfaces, usually touchscreen displays, of vending machines for selecting and personalising beverages or edible food products.

This issue is particularly perceived in the current historical period, during the Sars-CoV-2 pandemic, as a high degree of attention to hygiene, particularly hand hygiene, is required.

The aim of the present invention is thus to provide a product vending system, in particular a beverage vending system, which overcomes the problems of the prior art.

According to the present invention, a product vending system, in particular a beverage vending machine, is provided, as claimed in the appended claims.

### Brief Description of the Drawings

Figure 1 schematically shows a product vending system according to the present invention.
Figure 2 schematically shows selection and personalisation of beverages in a beverage vending machine through a consumer's mobile terminal.
Figure 3 schematically shows two different screens of a graphical user interface of a consumer's mobile terminal for selecting and personalising beverages in a beverage vending machine.

### Detailed Description of Preferred Embodiments of the Invention

The present invention will now be described in detail with reference to the accompanying drawings to enable a skilled person to realize and use it. Various modifications to the embodiments presented shall be immediately clear to persons skilled in the art and the general principles disclosed herein could be applied to other embodiments and applications but without thereby departing from the scope of protection of the present invention as defined in the appended claims. Therefore, the present invention should not be considered limited to the embodiments described and shown but should be granted the widest protective scope in accordance with the features described and claimed.

Where not otherwise defined, all the technical and scientific terms used herein have the same meaning commonly used by persons of ordinary skill in the field pertaining to the present invention. In the event of a conflict, this description, including the definitions provided, shall be binding. Furthermore, the examples are provided for illustrative purposes only and as such should not be considered limiting.

In particular, the block diagrams included in the accompanying figures and hereinafter described must not be considered as a representation of the structural features, i.e. construction limitations, but must be construed as a representation of functional features, namely intrinsic properties of the devices and defined by the obtained effects i.e. functional limitations which can be implemented in different ways, so as to protect the functionality thereof (chance of functioning).

In order to facilitate understanding of the embodiments described herein, reference will be made to some specific embodiments and a specific language will be used to describe them. The terminology used herein is for the purpose of describing only particular embodiments, and is not intended to limit the scope of the present invention.

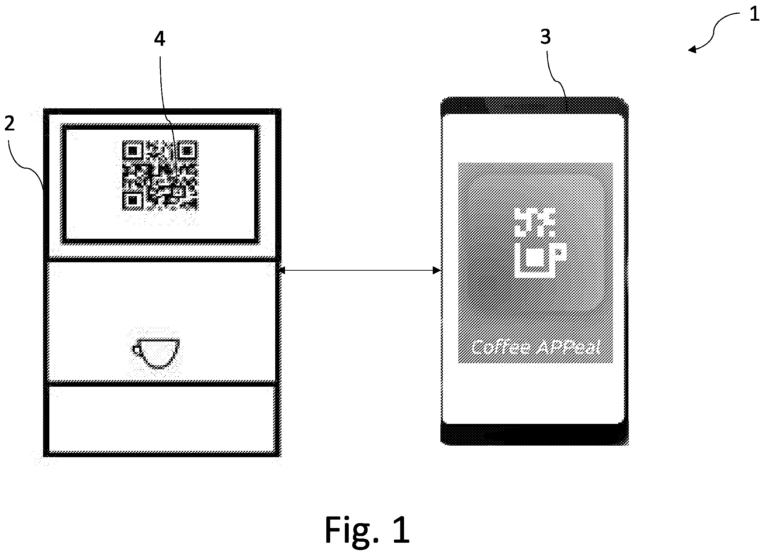

Figure 1 shows the block diagram of a product vending system **1** including:
- a product vending machine **2** provided with a user interface (HMI) comprising a display, typically a touchscreen display, and designed to allow consumers to select, personalise and control the delivery of products by the product vending machine **2;**
- a mobile software application, hereinafter referred to as the trade name *Coffee APPeal,* designed to cause, when downloaded and executed on a consumer's mobile terminal **3,** such as a smartphone, a note pad, a tablet, a phablet, etc., the mobile terminal **3** to become configured to communicate and cooperate with the product vending machine **2** to allow a consumer to request the product vending machine **2** to deliver a product, in particular to select, personalise, and control the delivery of a product by the product vending machine **2;** and
- a tag **4** to be associated with the product vending machine **2** and containing information, described in detail hereinafter, designed to enable communication and exchange of information between the product vending machine **2** and the mobile terminal **3.**

The information contained in tag **4** comprises:
- communication information to enable a communication to be established between the product vending machine **2** and the mobile terminal **3;**
- download information to allow the *Coffee APPeal* to be downloaded from an app store and installed on a mobile terminal **3;** and
- interface information representative of a graphical user interface to be displayed by the mobile terminal **3,** i.e., to be displayed on a display thereof, in order to allow a consumer to request the product vending machine **2** to deliver a product, in particular to select and personalise the product, by means of the mobile terminal **3,** as well as to control delivery of the products, as described in more detail hereinafter.

In particular, the *Coffee APPeal* app is designed to cause, when executed by the mobile terminal **3,** the mobile terminal **3** to become configured to:
- read the tag **4** associated with product vending machine **2** to extract the information contained therein;
- establish a communication with the product vending machine **2** based on the communication information read from the tag **4;**
- communicate with the product vending machine **2** to receive therefrom information on the products delivered thereby;
- display a graphical user interface designed to allow the consumer to request the product vending machine **2** to deliver a product; and
- communicate with the product vending machine **2** to provide it with information on a product to be delivered.

The product vending machine **2** is consequently configured to:
- establish a communication with the mobile terminal **3;**
- communicate with the mobile terminal **3** to receive therefrom information on a product to be delivered; and
- deliver the required product.

In a preferred embodiment, the product vending machine **2** is a beverage vending machine designed to deliver beverages, in particular beverages such as coffee, tea, chocolate and the like, prepared on demand from liquid and/or powder ingredients.

The graphical user interface of the mobile terminal **3** is therefore designed to allow a consumer to select a beverage to be delivered, to personalise the selected beverage, for example by varying the amount of additives it contains, such as sugar, cocoa, etc., and to control the beverage delivery process, in particular to interrupt the delivery of the selected beverage so as to obtain the desired "length" thereof.

In order to enable communication between the product vending machine **2** and the mobile terminal **3,** these are provided with short-range wireless communication interfaces, each of which is able to support one or different short-range wireless communication technologies comprising one or more of the Bluetooth technology, conveniently that according to 4.0 specification, also known as Bluetooth Low Energy (BLE) or Bluetooth Smart, which also includes an e-beacon functionality to facilitate the pairing process, NFC (Near Field Communication) technology, ZigBee technology and Wi-Fi technology for connection to a wireless local area network (WLAN).

In order to facilitate establishing communication between the short-range wireless communication interfaces of the product vending machine **2** and the mobile terminal **3,** the communication information contained in the tag **4** associated with the product vending machine **2** comprises identification information of the short-range wireless communication interface of the product vending machine **2,** in case BLE technology is used, the so-called Local Device Name of the BLE module of the beverage vending machine **2,** so as to allow the short-range wireless communication interface of the mobile terminal **3** to automatically search for and connect to the short-range wireless communication interface of the product vending machine **2** according to the protocol provided by the short-range wireless communication technology used, in the example considered the Bluetooth protocol.

The tag **4** can be made according to any of the present or future technologies.

In a preferred embodiment, the tag **4** has the form of a barcode of any type, e.g. linear or, conveniently, two-dimensional or matrix, also known as a QR code, so as to be readable, i.e. scannable, by a QR code scanner of the mobile terminal **3.**

In a more basic embodiment, the QR code can be printed on an adhesive label to be attached to a cabinet of the product vending machine **2** or it can be natively printed thereon.

In a different embodiment, the QR code can be displayed on a display of the user interface of the product vending machine **2** continuously or only at particular times, with a given periodicity. For example, the QR code may be displayed in the form of a pop-up when the product vending machine **2** enters a non-delivery condition, e.g. when it is in a stand-by mode or an energy-saving mode, which occurs when the product vending machine **2** has not delivered any products for a certain period of time, e.g. one minute.

In a more advanced embodiment, the QR code may be displayed on the display of the user interface of the vending machine **2** in response to a request from a user made on the user interface of the product vending machine **2** or when the product vending machine **2** automatically recognizes the user terminal **3** approaching the product vending machine **2.**

In a further different embodiment, the tag **4** may be in the form of an RFID tag, so as to be readable by an RFID reader of the mobile terminal **3,** if the latter has one.

The *Coffee APPeal* app can be downloaded from the app store to the mobile terminal **3** based on the download information contained in the QR code, which may for example be in the form of an Internet address (URL) of the app store and, once read from the QR code via the QR code scanner of the mobile terminal **3** and duly processed by the latter, causes the mobile terminal **3** to automatically connect to the app store, from which the *Coffee APPeal* app can then be downloaded to the mobile terminal **3** in a known manner.

In one embodiment, the graphical user interface of the mobile terminal **3** is embedded or native, in the sense that the *Coffee APPeal* app is designed to cause, when executed by the mobile terminal **3,** the mobile terminal **3 to** become configured to display a graphical user interface by design, , i.e. a graphical user interface purposely designed at a design stage.

In a preferred embodiment, the *Coffee APPeal* app is instead designed to cause, when executed by the user terminal **3,** the user terminal **3** to become configured to construct the graphical user interface of the user terminal **3** based on the interface information contained in the QR code attached to the product vending machine **2.**

In particular, in this embodiment, the *Coffee APPeal* app is conveniently designed to cause, when executed by the mobile terminal **3,** the graphical user interface of the mobile terminal **3** to display exactly the same list of products as that displayed on the display of the user interface of the product vending machine **2,** conveniently using the same names and providing the same options as those used on the product vending machine **2.**

The *Coffee APPeal* app is further designed to cause, when executed by the mobile terminal **3,** the mobile terminal **3** to become configured to communicate with the product vending machine **2** to request and receive information therefrom about the progress of the delivery of the requested product and to provide this information to the consumer by its own graphical user interface. In the case of beverage vending machines, this information may include information on the progression of the beverage delivery or even just on the start and/or end of the beverage delivery.

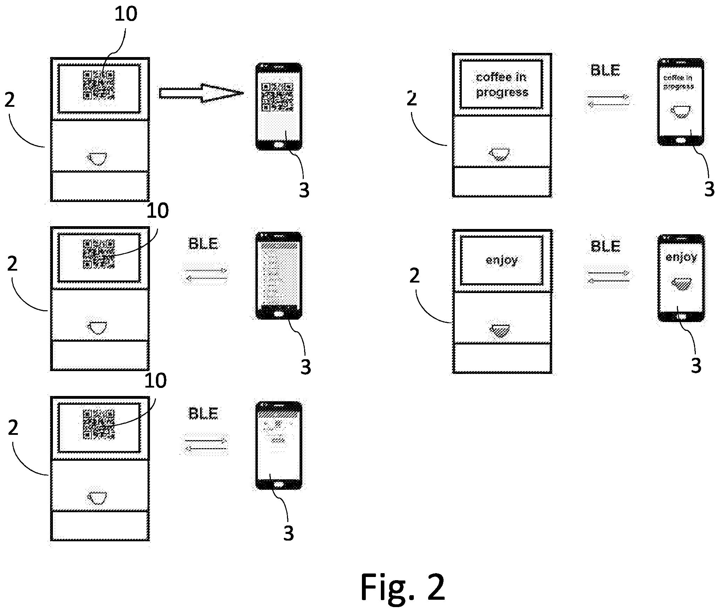

Figure 2 shows the various steps of delivering a product according to the present invention, in particular downloading *Coffee APPeal* from the app store to the mobile terminal **3** (first depiction on the left), establishing communication and exchanging information between the product vending machine **2** and the user terminal **3** to select and personalise the beverage requested to be delivered (second and third depiction on the left), and the exchange of information between the product vending machine **2** and the mobile terminal **3** to obtain and display information on the delivery of the beverage requested (fourth and fifth depictions on the right).

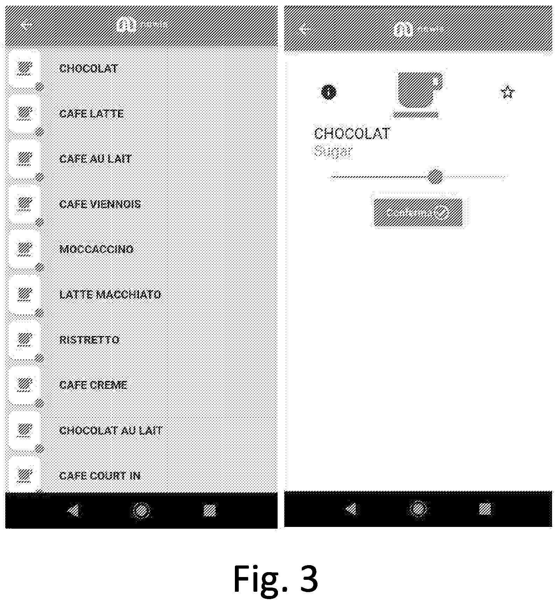

Figure 3 shows instead beverage selection (left) and beverage personalisation (right).

Based on what has been previously described, the advantages which the present invention allows to obtain may be appreciated.

In particular, the product delivery system **1** allows a consumer to request a product to be delivered by a product vending machine **2** using his/her personal mobile terminal **3,** without having to come into direct contact with the product vending machine **2,** thus avoiding the possibility of coming into contact with germs, viruses, bacteria or other pathogenic micro-organisms that may lead to the spread of contagious infectious diseases.

Such an advantage finds a particular application in the present historical period, as well in everyday life; in fact, it is well known that, as occurs with smartphones for example, surfaces can be an effective vehicle for a non-negligible number of bacteria and viruses, especially if they are not regularly treated and cleaned. Thanks to the present invention, the product delivery system **1** allows a higher degree of cleanliness of the product vending machine **2** to be to maintained.

Therefore, the present invention allows to reduce the incidence of transmission of pathogenic micro-organisms between individuals who wish to use the products made available by a product vending machine **2.**

Furthermore, the present invention enables consumers' mobile terminals to communicate with the product vending machines to request the delivery of products even in the absence of mobile network coverage.

Similarly, the present invention enables vending machines to deliver products requested by consumers' mobile terminals even in the absence of any connection to a wired or wireless computer network, for example the Internet, or the mobile cellular network.

## Claims

1. A product vending system (**1**) comprising:
- a product vending machine (**2**);
- a mobile application (*Coffee APPeal*) downloadable and executable on a mobile terminal (**3**) of a consumer and designed to cause, when executed by the mobile terminal (**3**), the mobile terminal (**3**) to become configured to communicate and cooperate with the product vending machine (**2**) to allow the consumer to request the product vending machine (**2**) to deliver a product;
- a tag (**4**) to be associated with the product vending machine (**2**) and containing communication information to allow a short-range communication to be established between the product vending machine (**2**) and the mobile terminal (**3**) and interface information representative of a graphical user interface to be displayed by the mobile terminal (**3**) to allow the consumer to request the product vending machine (**2**) to deliver a product;
the mobile application (*Coffee APPeal*) is further designed to cause, when executed by the mobile terminal (**3**), the mobile terminal (3) to become configured to:
- read the tag (**4**) to extract the communication and interface information contained therein;
- establish a short-range communication with the product vending machine (**2**) based on the communication information read from the tag (**4**);
- communicate with the product vending machine (**2**) to receive therefrom information on the products deliverable thereby;
- construct and display the graphical user interface based on the interface information read from the tag (**4**); and
- communicate with the product vending machine (**2**) to provide it with information indicative of a product to be delivered;
the product vending machine (**2**) is configured to:
- establish a short-range communication with the user terminal (**3**);
- communicate with the user terminal (**3**) to receive therefrom information on a product to be delivered; and
- deliver a requested product.

2. The product vending system (**1**) of claim **1,** wherein the tag (**4**) further comprises download information to enable the mobile application (*Coffee APPeal*) to be downloaded from an app store to the mobile terminal (**3**);
and the mobile terminal (**3**) is configured to download the mobile application (*Coffee APPeal*) based on the download information read from the tag (**4**).

3. The product vending system (**1**) of any one of the preceding claims, wherein the product vending machine (**2**) and the user terminal (**3**) comprise respective short-range wireless communication interfaces;
and the communication information contained in the tag (**4**) comprises information identifying the short-range wireless communication interface of the product vending machine (**2**).

4. The product vending system (**1**) of any one of the preceding claims, wherein the product vending machine (2) is a beverage vending machine (2);
and the graphical user interface displayed by the mobile terminal (**3**) is designed to allow a consumer to control delivery of a beverage requested to the beverage vending machine (2).

5. The product vending system (**1**) of claim 4, wherein the graphical user interface displayed by the mobile terminal (**3**) is further designed to allow a consumer one or more of interrupting the delivery of a beverage and personalising a beverage requested to the beverage vending machine (2).

6. The product vending system (**1**) of any one of the preceding claims, wherein the product vending machine (**2**) comprises a user interface designed to display a graphical user interface on which products deliverable by the product vending machine (**2**) are displayed;
and the mobile application (*Coffee APPeal*) is further designed to cause, when executed by the mobile terminal (**3**), the graphical user interface displayed by the mobile terminal (**3**) to display the same list of products as the one displayed on the graphical user interface displayed by the product vending machine (**2**).

7. The product vending system (**1**) of any one of the preceding claims, wherein the tag (**4**) is a QR code readable by a QR code scanner of the mobile terminal (**3**).

8. Software loadable in a product vending machine (**2**) and in a mobile application (*Coffee APPeal*) for a mobile terminal (**3**) and designed to cause, when executed by the product vending machine (**2**) and, respectively, the mobile terminal (**3**), the product vending machine (**2**) and the mobile terminal (**3**) to become configured to cooperate to implement the product vending system (**1**) of any one of claims **1** to **7.**

## Patentansprüche

1. Ein Produktverkaufssystem (1), das Folgendes aufweist:
- einen Produktverkaufsautomaten bzw. Produktautomaten (2);
- eine mobile Anwendung (*Coffee APPeal*)*,* die auf ein mobiles Endgerät (3) eines Verbrauchers heruntergeladen und darauf ausgeführt werden kann und die so gestaltet ist, dass sie, wenn sie von dem mobilen Endgerät (3) ausgeführt wird, bewirkt, dass das mobile Endgerät (3) so konfiguriert wird, dass es mit dem Produktautomaten (2) kommuniziert und zusammenarbeitet, um dem Verbraucher zu ermöglichen, den Produktautomaten (2) aufzufordern, ein Produkt zu liefern;
ein Tag bzw. Etikett (4), das mit dem Produktautomaten (2) zu verbinden ist und das Kommunikationsinformationen enthält, um zu gestatten, dass eine Kurzstrecken- bzw. Nahbereichskommunikation zwischen dem Produktautomaten (2) und dem mobilen Endgerät (3) hergestellt wird, und Schnittstelleninformationen, die eine grafische Benutzeroberfläche darstellen, die von dem mobilen Endgerät (3) angezeigt werden soll, um dem Verbraucher zu ermöglichen, den Produktautomaten (2) aufzufordern, ein Produkt zu liefern;
wobei die mobile Anwendung (*Coffee APPeal*) ferner so gestaltet ist, dass sie, wenn sie von dem mobilen Endgerät (3) ausgeführt wird, das mobile Endgerät (3) veranlasst, konfiguriert zu werden, um:
- das Etikett (4) zu lesen, um die darin enthaltenen Kommunikations- und Schnittstelleninformationen zu extrahieren;
- eine Nahbereichskommunikation mit dem Produktautomaten (2) auf Grundlage der aus dem Etikett (4) gelesenen Kommunikationsinformationen herzustellen;
- mit dem Produktautomaten (2) zu kommunizieren, um von ihm Informationen über die von ihm lieferbaren Produkte zu erhalten;
- die grafische Benutzeroberfläche auf Grundlage der aus dem Etikett (4) gelesenen Schnittstelleninformationen zu erstellen und anzuzeigen; und
- mit dem Produktautomaten (2) zu kommunizieren, um ihn mit Informationen zu versorgen, die auf ein zu lieferndes Produkt hinweisen;
wobei der Produktautomat (2) ist konfiguriert, um:
- eine Nahbereichskommunikation mit dem mobilen Endgerät (3) herzustellen;
- mit dem mobilen Endgerät (3) zu kommunizieren, um von diesem Informationen über ein abzugebendes Produkt zu erhalten; und
- ein angefordertes Produkt zu liefern.

2. Das Produktverkaufssystem (1) nach Anspruch 1, wobei das Etikett (4) ferner Download-Informationen aufweist, um zu ermöglichen, dass die mobile Anwendung (*Coffee APPeal*) von einem App-Store auf das mobile Endgerät (3) heruntergeladen werden kann;
und wobei das mobile Endgerät (3) so konfiguriert ist, dass es die mobile Anwendung (*Coffee APPeal*) auf Grundlage der von dem Etikett (4) gelesenen Download-Informationen herunterlädt.

3. Das Produktverkaufssystem (1) nach einem der vorhergehenden Ansprüche, wobei der Produktautomat (2) und das mobile Endgerät (3) jeweils drahtlose Nahbereichs-Kommunikationsschnittstellen aufweisen;
und wobei die in dem Etikett (4) enthaltenen Kommunikationsinformationen Informationen zur Identifizierung der drahtlosen Nahbereichs-Kommunikationsschnittstelle des Produktautomaten (2) aufweisen.

4. Das Produktverkaufssystem (1) nach einem der vorhergehenden Ansprüche, wobei der Produktautomat (1) ein Getränkeautomat (2) ist;
und wobei die von dem mobilen Endgerät (3) angezeigte grafische Benutzeroberfläche so gestaltet ist, dass sie es einem Verbraucher ermöglicht, eine Abgabe eines angeforderten Getränks an den Getränkeautomaten (2) zu steuern.

5. Das Produktverkaufssystem (1) nach Anspruch 4, wobei die von dem mobilen Endgerät (3) angezeigte grafische Benutzerschnittstelle ferner so gestaltet ist, dass sie es einem Verbraucher ermöglicht, die Lieferung eines Getränks zu unterbrechen und/oder ein für den Getränkeautomaten (2) angefordertes Getränk zu personalisieren.

6. Das Produktverkaufssystem (1) nach einem der vorhergehenden Ansprüche, wobei der Produktautomat (2) eine Benutzerschnittstelle aufweist, die so gestaltet ist, dass sie eine grafische Benutzerschnittstelle anzeigt, auf der von dem Produktautomaten (2) lieferbare Produkte angezeigt werden,
und wobei die mobile Anwendung (*Coffee APPeal*) ferner so ausgelegt ist, dass sie, wenn sie von dem mobilen Endgerät (3) ausgeführt wird, bewirkt, dass die von dem mobilen Endgerät (3) angezeigte grafische Benutzeroberfläche die gleiche Liste von Produkten anzeigt wie diejenige, die auf der von dem Produktautomaten (2) angezeigten grafischen Benutzeroberfläche angezeigt wird.

7. Das Produktverkaufssystem (1) nach einem der vorhergehenden Ansprüche, wobei das Etikett (4) ein OR-Code ist, der von einem QR-Code-Scanner des mobilen Endgeräts (3) gelesen werden kann.

8. Software, die in einen Produktverkaufsautomaten bzw. Produktautomaten (2) und in eine mobile Anwendung (*Coffee APPeal*) für ein mobiles Endgerät (3) geladen werden kann und die dafür ausgelegt ist, jeweils bei Ausführung durch den Produkautomaten (2) und das mobile Endgerät (3) den Produktautomaten (2) und das mobile Endgerät (3) zu veranlassen, so konfiguriert zu werden, dass sie zusammenarbeiten, um das Produktverkaufssystem (1) nach einem der Ansprüche 1 bis 7 zu implementieren.

## Revendications

1. Système de distribution automatique de produits (1) comprenant :
- un distributeur automatique de produits (2) ;
- une application mobile (*Coffee APPeal*) téléchargeable et exécutable sur un terminal mobile (3) d'un consommateur et conçue pour faire en sorte, lorsqu'elle est exécutée par le terminal mobile (3), que le terminal mobile (3) soit configuré pour communiquer et coopérer avec le distributeur automatique de produits (2) afin de permettre au consommateur de demander au distributeur automatique de produits (2) de livrer un produit ;
- une étiquette (4) à associer au distributeur automatique de produits (2) et contenant des informations de communication permettant d'établir une communication à courte portée entre le distributeur automatique de produits (2) et le terminal mobile (3) et d'afficher, par le terminal mobile (3), des informations d'interface représentatives d'une interface utilisateur graphique afin de permettre au consommateur de demander au distributeur automatique de produits (2) de livrer un produit ;
l'application mobile (*Coffee APPeal*) est en outre conçue pour faire en sorte, lorsqu'elle est exécutée par le terminal mobile (3), que le terminal mobile (3) soit configuré pour :
- lire l'étiquette (4) pour extraire les informations de communication et d'interface qu'elle contient ;
- établir une communication à courte portée avec le distributeur automatique de produits (2) sur la base des informations de communication lues sur l'étiquette (4) ;
- communiquer avec le distributeur automatique de produits (2) pour recevoir de celui-ci des informations sur les produits qu'il peut livrer ;
- construire et afficher l'interface utilisateur graphique sur la base des informations d'interface lues sur l'étiquette (4) ; et
- communiquer avec le distributeur automatique de produits (2) pour lui fournir des informations indicatives d'un produit à livrer ;
le distributeur automatique de produits (2) est configuré pour :
- établir une communication à courte portée avec le terminal utilisateur (3) ;
- communiquer avec le terminal utilisateur (3) pour recevoir de celui-ci des informations sur un produit à livrer ; et
- livrer un produit demandé.

2. Système de distribution automatique de produits (1) de la revendication 1, dans lequel l'étiquette (4) comprend en outre des informations de téléchargement pour permettre le téléchargement de l'application mobile (*Coffee APPeal*) à partir d'un magasin d'applications sur le terminal mobile (3) ;
et le terminal mobile (3) est configuré pour télécharger l'application mobile (*Coffee APPeal*) sur la base des informations de téléchargement lues sur l'étiquette (4).

3. Système de distribution automatique de produits (1) de l'une quelconque des revendications précédentes, dans lequel le distributeur automatique de produits (2) et le terminal utilisateur (3) comprennent des interfaces de communication sans fil à courte portée respectives ;
et les informations de communication contenues dans l'étiquette (4) comprennent des informations identifiant l'interface de communication sans fil à courte portée du distributeur automatique de produits (2).

4. Système de distribution automatique de produits (1) de l'une quelconque des revendications précédentes, dans lequel le distributeur automatique de produits (1) est un distributeur automatique de boissons (2) ;
et l'interface utilisateur graphique affichée par le terminal mobile (3) est conçue pour permettre à un consommateur de commander la livraison d'une boisson demandée au distributeur automatique de boissons (2).

5. Système de distribution automatique de produits (1) de la revendication 4, dans lequel l'interface utilisateur graphique affichée par le terminal mobile (3) est en outre conçue pour permettre à un consommateur d'interrompre la livraison d'une boisson et/ou de personnaliser une boisson demandée au distributeur automatique de boissons (2).

6. Système de distribution automatique de produits (1) de l'une quelconque des revendications précédentes, dans lequel le distributeur automatique de produits (2) comprend une interface utilisateur conçue pour afficher une interface utilisateur graphique sur laquelle sont affichés des produits livrables par le distributeur automatique de produits (2) ;
et l'application mobile (*Coffee APPeal*) est en outre conçue pour, lorsqu'elle est exécutée par le terminal mobile (3), amener l'interface utilisateur graphique affichée par le terminal mobile (3) à afficher la même liste de produits que celle affichée sur l'interface utilisateur graphique affichée par le distributeur automatique de produits (2).

7. Système de distribution automatique de produits (1) de l'une quelconque des revendications précédentes, dans lequel l'étiquette (4) est un code QR lisible par un lecteur de code QR du terminal mobile (3) .

8. Logiciel chargeable dans un distributeur automatique de produits (2) et dans une application mobile (*Coffee APPeal*) pour un terminal mobile (3) et conçue pour faire en sorte, lorsqu'elle est exécutée par le distributeur automatique de produits (2), que le terminal mobile (3), le distributeur automatique de produits (2) et le terminal mobile (3) soient respectivement configurés pour coopérer afin de mettre en oeuvre le système de distribution automatique de produits (1) de l'une quelconque des revendications 1 à 7.
